# EUROPEAN PATENT APPLICATION

(11) **EP 4 799 873 A1**
(43) Date of publication of application: **02.09.2026**
(21) Application number: 24882210.8
(22) Date of filing: 10.10.2024
(51) Int. Cl.: B60R 21/207, B60R 21/233

(54) **VEHICLE SIDE AIRBAG DEVICE**

(30) Priority: 23.10.2023 JP 2023181897
(71) Applicant: AUTOLIV DEVELOPMENT AB, 44783 Vargarda (JP)
(72) Inventor: SAKURAI, Tsutomu, Yokohama-shi, Kanagawa 222-8580 (JP); KOBATA, Tadashi, Yokohama-shi, Kanagawa 222-8580 (JP)
(74) Representative: Müller Verweyen
(86) International application number: PCT/JP2024/036285
(87) International publication number: WO 2025/089097

(57) **Abstract**

To provide a vehicle side airbag device capable of efficiently protecting adjacent occupants.

RESOLUTION MEANS

The airbag module 112 of the vehicle side airbag device 100 includes an inflator 116 secured to the first seat 102 and an airbag cushion 114 that receives gas from the inflator 116 and expands and deploys. The airbag cushion 114 includes a main chamber 120 that expands and deploys from an area above the console box 130 to an area to the side of the console box 130 on the first seat 102 side, and a sub-chamber 122 that protrudes from a part of the main chamber 120 above the console box 130 towards the second seat 128 side and expands and deploys to an area to the side of the console box 130 on the second seat 128 side.

## Description

### TECHNICAL FIELD

The present invention relates to a vehicular side airbag device for restraining an occupant seated in a vehicle seat.

### BACKGROUND ART

Airbag devices have generally become standard equipment in vehicles in recent years. An airbag device is a safety device which is operated in the event of an emergency such as a vehicle collision, retaining and protecting occupants utilizing an airbag cushion which expands and deploys based on gas pressure. There are various types of airbag devices depending on the installation site and application. For example, FIG. 3 of Patent Document 1 discloses a far side airbag device 16 as one form of a side airbag device provided on the side of a seat.

Generally, the "far side" refers to the side of a vehicle furthest from the collision, while the "near side" refers to the side of the vehicle closer to the collision. In the technology described in Patent Document 1, as shown in paragraph 0054 and FIG. 1, a sub-bag 40 is retained on a console box 14A, thereby supporting a lower part 38L of a main bag 38 from the inside in the vehicle width direction, and thereby improving the occupant protection performance of an airbag 32.

### RELATED ART DOCUMENTS

### PATENT DOCUMENTS

Patent Document 1: JP 2014-108740A

### SUMMARY OF THE INVENTION

### PROBLEM TO BE SOLVED BY THE INVENTION

According to the technology described in Patent Document 1, the occupant P seated in the vehicle seat 12 can be prevented from moving to the far side. However, depending on the nature of the vehicle collision, there is a possibility that the occupant of the adjacent seat may enter the vehicle seat 12 side. In seeking to further improve occupant protection performance of a side airbag device, a device configuration that also assumes intrusion of an occupant from an adjacent seat is required.

In light of these problems, an object of the present invention is to provide a vehicle side airbag device that can efficiently protect adjacent occupants.

### MEANS FOR SOLVING THE PROBLEM

To resolve the problems described above, a typical configuration of a vehicle side airbag device according to the present invention includes:
a first seat and a second seat arranged in a vehicle width direction with a prescribed console box installed on a floor of the vehicle interposed therebetween; and
an airbag module provided at a side part of the first seat, on the second seat side, wherein
the airbag module includes:
   an inflator secured to the first seat; and
   an airbag cushion configured to receive gas from the inflator and expand and deploy, and
   the airbag cushion includes:
      a main chamber that expands and deploys at least from a range above the console box to a lateral range on the first seat side of the console box; and
      a sub-chamber that expands and deploys to a lateral range on the second seat side of the console box while protruding toward the second seat side from a location, of the main chamber, that is above the console box.

In the configuration described above, the main chamber can restrain the occupant of the first seat, and the sub-chamber can restrain the occupant of the second seat as well. Specifically, when an occupant of the second seat is about to move toward the first seat side, the vicinity of the waist part of the occupant of the second seat can be restrained by the sub-chamber while kinetic energy is attenuated, and the trajectory of the head part of the occupant can be kept within the main chamber and restrained, whereby contact between the occupants can be avoided. Therefore, with the configuration described above, adjacent occupants can be efficiently protected.

The airbag cushion described above may expand and deploy while sandwiching the console box between the main chamber and the sub-chamber.

According to the configuration described above, the airbag cushion becomes more effective at maintaining orientation when expanded and deployed, enabling improvement to occupant restraint.

The main chamber described above may expand and extend to an area above the upper end of the seat back of the first seat.

With the configuration described above, contact between the occupant of the first seat and the occupant of the second seat can be fully prevented.

The sub-chamber described above may have a sub-upper wall part that protrudes from the main chamber along the top surface of the console box toward the second seat side, and a sub-side wall part that bends downward from the sub-upper wall part and extends to a lateral area on the second seat side of the console box.

With the sub-chamber configured as described above, expansion and deployment between the second seat and the console box becomes possible.

The sub-upper wall part described above may be in contact with the top surface of the console box.

With the sub-chamber described above, the occupant can be restrained in a stable orientation by using the console box as support for expansion and deployment.

The cross-sectional area of the sub-upper wall part described above may gradually increase from the second seat side toward the main chamber.

With the configuration described above, the sub-upper wall part becomes less likely to bend relative to the main chamber, enabling effective restraint of the occupant.

The sub-side wall part described above may expand and deploy in a state that extends vertically between the second seat and the console box.

With the configuration described above, expansion and deployment between the second seat and the console box becomes possible.

The airbag cushion described above may further include a partition wall partitioning the main chamber and the sub-chamber, and vent holes formed in the partition wall through which gas passes.

According to the configuration described above, the expansion pressure of the sub-chamber can be suitably maintained.

The airbag cushion described above may further include a check valve provided on the sub-chamber side of the partition wall to prevent backflow of gas into the main chamber.

Furthermore, with the configuration described above, the expansion pressure of the sub-chamber can be suitably maintained.

### EFFECT OF THE INVENTION

According to the present invention, a vehicle side airbag device capable of efficiently protecting adjacent occupants can be provided.

### BRIEF DESCRIPTION OF THE DRAWINGS

FIG. 1 is a diagram depicting an outline of a side airbag device according to an embodiment of the present invention;
FIG. 2 is a diagram depicting the airbag cushion of FIG. 1(b) as viewed from various directions;
FIG. 3 depicts the side airbag device of FIG. 1(b) after activation as viewed from the front of the vehicle;
FIG. 4 is a diagram depicting Modified Examples 1 and 2 of the airbag cushion of FIG. 3(a);
FIG. 5 is a diagram depicting Modified Example 3 of the airbag cushion of FIG. 3(a); and
FIG. 6 is a diagram depicting the Modified Examples 1 and 2 for near a vent hole in FIG. 3(a).

### EMBODIMENTS OF THE INVENTION

Preferred embodiments according to the present invention will hereinafter be described in detail with reference to the attached drawings. Dimensions, materials, other specific numerical values, and the like indicated in the embodiments are merely examples for ease of understanding the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

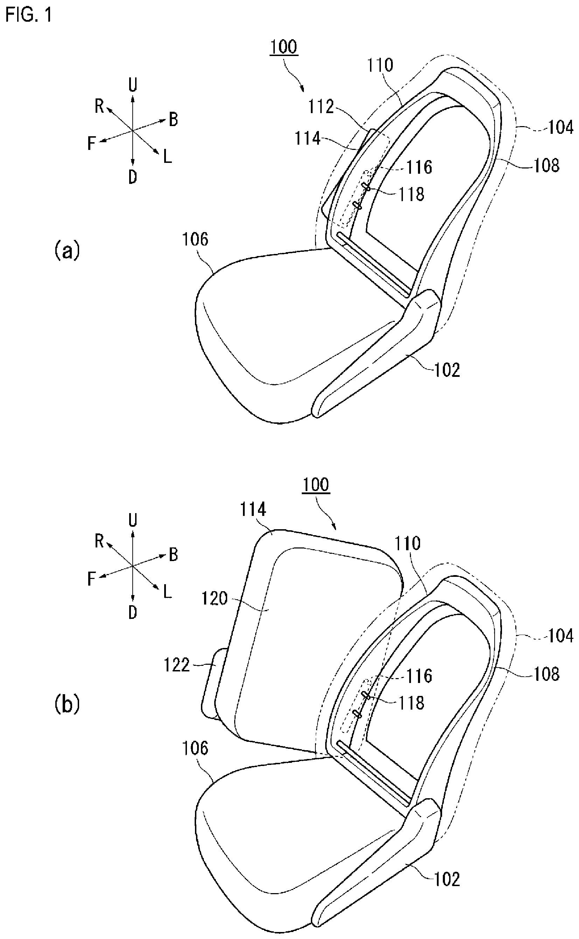

FIG. 1 is a diagram depicting an outline of a side airbag device 100 according to an embodiment of the present invention. FIG. 1(a) is a diagram depicting the state of the side airbag device 100 before activation.

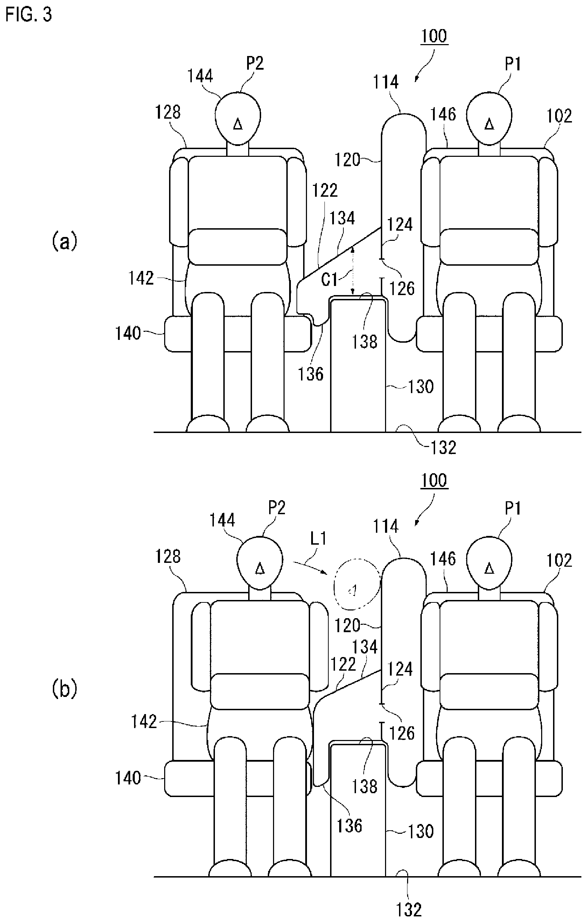

In the present embodiment, when occupant P1 (see FIG. 3(a)) is seated in a first seat 102 in a normal orientation, the direction that occupant P1 is facing is referred to as the front, and the opposite direction is referred to as the rear. In addition, when the occupant P1 is seated in the first seat 102 in a normal orientation, the right side of occupant P1 is referred to as the right direction, and the left side of occupant P1 is referred to as the left direction. Furthermore, when occupant P1 is seated in the first seat 102 in a normal orientation, the direction of the head part of the occupant P1 is referred to as up, and the direction of the waist part of the occupant P1 is referred to as down. In the drawings used in the following description, as necessary, the front, back, left, right, up and down directions relative to the occupant P1 are indicated by arrows F (Forward), B (Back), L (Left), R (Right), U (Up), and D (Down), respectively.

The first seat 102 is, for example, assumed to be the left-hand seat in the front row of the vehicle interior. The first seat 102 has a seat back 104 that supports the back of the occupant P1 (see FIG. 3(a)) and a seat cushion 106 that supports the buttocks of the occupant P1. In FIG. 1(a), the seat back 104 is depicted with a seat frame 108 and the like inside the seat back visible therethrough, and the outer surface is indicated by a broken line.

The seat frame 108 is a skeletal structure member equipped in the seat back 104. The seat frame 108 is surrounded by a seat pad filled with urethane material or the like. A side frame 110 is a part of the seat frame 108 that extends along the side of the seat back 104. The airbag module 112 is attached to a side frame 110 on the outer side in the width direction of the seat back 104.

An airbag module 112 includes an inflator 116 secured to the side frame 110 of the first seat 102, and an airbag cushion 114 that receives gas from the inflator 116 and expands and deploys.

An inflator 116 is a gas generating device that operates upon receiving an activation signal transmitted from the vehicle side when an impact occurs, and supplies gas to the inside of the airbag cushion 114. In the present embodiment, the inflator 116 used is a cylinder type.

The inflator 116 is housed inside the airbag cushion 114 on the back side. The inflator 116 has a plurality of stud bolts 118, and is secured to the first seat 102 by fastening the stud bolts 118 to the side frame 110.

Examples of currently prevailing inflators include: types which are filled with a gas-generating agent and burn the agent to generate gas; types which are filled with compressed gas and supply gas without generating heat; and hybrid types which utilize both combustion gas and compressed gas. Any of these types can be used for the inflator 116.

Before activation, the airbag cushion 114 is formed into a stowed form in which the airbag cushion is rolled or folded into a state in which an inflator 116 is inserted, wrapped on an outer periphery thereof by a cover or the like, and unitized as an airbag module 112.

FIG. 1(b) depicts the side airbag device 100 of FIG. 1(a) after activation. In an emergency such as when an impact occurs to the vehicle or when a vehicle collision is predicted, a control unit sends an activation signal to the inflator 116 of the side airbag device 100.

When the airbag cushion 114 receives gas from the activated inflator 116, the expansion pressure causes the cover thereof to rupture, and the airbag cushion expands and deploys from the side frame 110 toward the front of the seat back 104, restraining the occupant seated in the first seat 102 from the side.

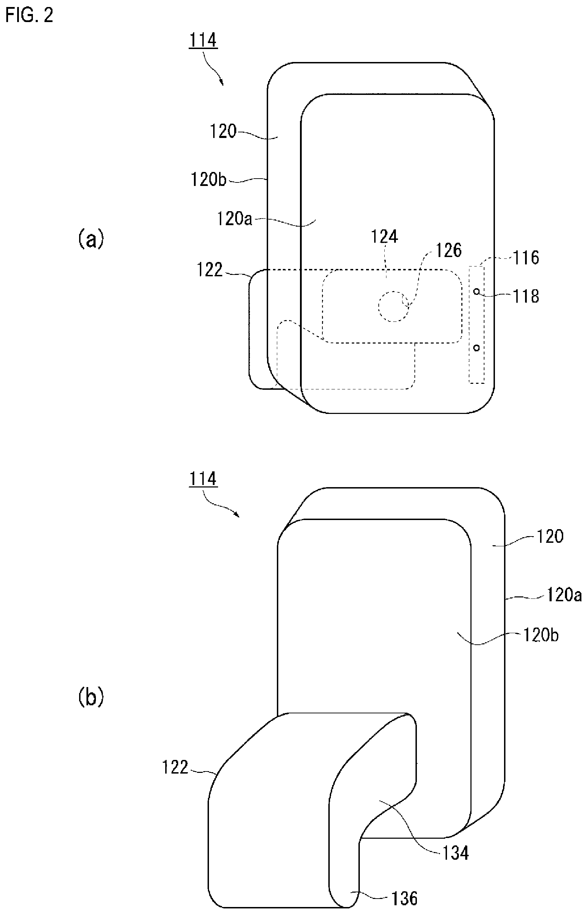

FIG. 2 is a diagram depicting the airbag cushion 114 of FIG. 1(b) as viewed from various directions. FIG. 2(a) is a perspective view depicting the airbag cushion 114 from the same direction as FIG. 1(b).

The airbag cushion 114 is a bag-shaped member for capturing an occupant and is formed by overlapping, stitching, or adhering a plurality of base materials included on the surface thereof or weaving using OPW (one piece woven).

The airbag cushion 114 of the present embodiment is configured to include, as expansion parts for restraining an occupant, a main chamber 120 having a broad shape and a sub-chamber 122 protruding from the main chamber 120 toward the side opposite to the first seat 102.

The main chamber 120 constitutes the main portion of the airbag cushion 114 and expands and deploys to extend forward from the seat back 104. The outer surface of the main chamber 120 is composed of a main panel 120a positioned on the left side in the width direction, on the side of the first seat 102, and a main panel 120b on the right side in the width direction, on the opposite side from the first seat 102.

The main panels 120a and 120b are made from a base fabric and form a bag-shaped main chamber 120 by sewing, bonding, or the like. Note that main chamber 120 can also be formed using a OPW (One-Piece Woven) textile or the like.

The inflator 116 is built into the lower rear part of the main chamber 120. The main chamber 120 receives gas directly from the inflator 116 and expands and deploys rapidly.

FIG. 2(b) is a perspective view depicting the airbag cushion 114 from the opposite side of FIG. 1(b). The sub-chamber 122 is connected to the main panel 120b of the main chamber 120, on the side opposite that of the first seat 102 (see FIG. 1(b)).

In the present embodiment, the sub-chamber 122 expands and deploys into an overall shape that is close to an L-shape. The sub-chamber 122 expands so as to cover a console box 130, described later (see FIG. 3(a)), and is capable of restraining an occupant P2 of a second seat 128.

As depicted in FIG. 2(a), the connection area between the sub-chamber 122 and the main panel 120b is a partition wall 124. The partition wall 124 is the area that separates the main chamber 120 and the sub-chamber 122.

The partition wall 124 is provided with a vent hole 126 through which gas passes. The sub-chamber 122 receives gas from the main chamber 120 using the vent hole 126 and expands and deploys to protrude from the main chamber 120 toward a second seat 102 [sic] side (see FIG. 3(a)).

FIG. 3 depicts the side airbag device 100 of FIG. 1(b) after activation as viewed from the front of the vehicle. FIG. 3(a) is an example of the side airbag device 100 immediately after activation.

FIG. 3(a) also depicts examples of occupant P1 and occupant P2 seated in a normal orientation on the first seat 102 and the second seat 128, respectively.

Occupants P1 and P2 are examples of dummies used in automobile crash tests. Dummies that can be used for occupants P1 and P2 include, for example, Hybrid III AM50 and AF05 dummies and the like for frontal crash tests.

The AM50 is a dummy modeled after a male with a height of 175 cm and a weight of 78 kg, and whose physical build corresponds to the 50th percentile of American adult male. The AF05 is a dummy that is modeled after a small female with a height of 145 cm, a seated height of 79 cm, and a weight of approximately 45 kg. These dummies are based on US National Highway Traffic Safety Association (NHTSA) standards.

The console box 130 is installed mainly in the center of a floor 132 inside the vehicle and is used as a storage area for small items. The first seat 102 and the second seat 128 are arranged in the vehicle width direction, separated by the console box 130. In the present embodiment, the airbag module 112 is provided on the side of the first seat 102 that is on the side of the second seat 128.

The main chamber 120 expands and deploys in a flattened shape that extends in the up-down direction and front-back direction, from at least above the console box 130 to the lateral area on the first seat 102 side of the console box 130.

The sub-chamber 122 protrudes toward the second seat 128 side from a location on the main panel 120b of the main chamber 120 that is above the console box 130, and expands and deploys to a lateral area on the second seat 128 side of the console box 130.

The sub-chamber 122 broadly includes a sub-upper wall part 134 extending in the vehicle width direction and a sub-side wall part 136 extending in the vertical direction.

The sub-upper wall part 134 expands and deploys so as to protrude from the main chamber 120 along a top surface 138 of the console box 130 toward the second seat 128.

The sub-side wall part 136 bends downward from the tip end of the sub-upper wall part 134 and expands and deploys to extend to the lateral area of the console box 130 on the second seat 128 side. In this manner, the sub-chamber 122 can expand and deploy between the second seat 128 and the console box 130.

In other words, the airbag cushion 114 can expand and deploy while sandwiching the console box 130 between the main chamber 120 and the sub-chamber 122. As a result, the airbag cushion 114 can more readily maintain an orientation when expanded and deployed, enabling improvement of the occupant restraining force.

FIG. 3(b) is a diagram of an example of the side airbag device 100 after some time (several milliseconds) has passed from FIG. 3(a).

The side airbag device 100 is capable of restraining the occupant P1 of the first seat 102 using the main chamber 120. For example, the main chamber 120 prevents the occupant P1 of the first seat 102 from moving toward the second seat 128, and protects the occupant P1 from coming into contact with the adjacent occupant P2 or surrounding structures.

Depending on the direction of the impact, the occupant P2 of the second seat 128 may move towards the first seat 102. At this time, with the present embodiment, the side airbag device 100 utilizes the sub-chamber 122 to suppress movement of the occupant P2 of the second seat 128.

The airbag cushion 114 expands and deploys, sandwiching the console box 130 between the main chamber 120 and the sub-chamber 122. This enables the airbag cushion 114 to maintain an orientation of being expanded and deployed, and to improve the restraining force on occupant P1 and occupant P2.

As described above, the sub-chamber 122 expands and deploys to cover the upper side of the console box 130 and the second seat 128 side. In particular, the sub-side wall part 136 expands and deploys to extend to the lateral area of the console box 130 on the second seat 128 side. This configuration enables the sub-chamber 122 to expand and deploy laterally to a seat cushion 140 side of the second seat 128, thereby restraining the occupant P2 mainly around a waist part 142.

The waist part 142 of the occupant P2 is a strong part of the human body and is close to the center of gravity. The sub-chamber 122 can efficiently absorb the kinetic energy of the occupant P2 by restraining the area around the waist part 142 of the occupant P2.

The sub-chamber 122 can change the trajectory of occupant P2 by restraining the waist part 142 of the occupant P2 as the occupant attempts to move toward the first seat 102. More specifically, when the waist part 142 of the occupant P2 is restrained by the sub-chamber 122, a trajectory L1 is created in which a head part 144 tilts toward the first seat 102. By causing this trajectory L1 to occur, the head part 144 of occupant P2 can be restrained while being kept within the range of the main chamber 120.

In the present embodiment, the main chamber 120 is configured to expand and deploy to an area above an upper end 146 of the seat back 104 of the first seat 102. As a result, the main chamber 120 can broadly restrain the body of the occupant P1 on the first seat 102, and restrain the occupant P2 of the second seat 128 over a wide area. In this way, the main chamber 120 is able to completely prevent contact between occupant P1 and occupant P2.

Thus, the airbag cushion 114 of the present embodiment can not only restrain the occupant P1 of the first seat 102 by the main chamber 120, but can also restrain the occupant P2 of the second seat 128 by the sub-chamber 122. In particular, when the occupant P2 of the second seat 128 attempts to move toward the first seat 102, the sub-chamber 122 can restrain the area around the waist part 142 of the occupant P2, thereby attenuating the kinetic energy thereof. Furthermore, the trajectory L1 of the head part 144 of the occupant P2 is kept within the range of the main chamber 120 and restrained, thereby preventing contact between occupant P1 and occupant P2. In this manner, the side airbag device 100 is capable of efficiently protecting adjacent occupants.

As depicted in FIG. 3(a), cross-sectional area C1 of the sub-upper wall part 134 gradually increases from the second seat 128 side toward the main chamber 120. As a result, the sub-upper wall part 134 is less likely to bend relative to the main chamber 120, enabling the sub-chamber 122 to more effectively restrain the occupant P2.

The sub-side wall part 136 expands and deploys in a vertically extending state between the second seat 128 and the console box 130. As a result, the sub-chamber 122 efficiently expands and deploys between the second seat 128 and the console box 130, enabling full support of the waist part of the occupant P2.

The sub-upper wall part 134 expands and deploys, protruding from the main chamber 120 towards the second seat 128 side while in contact with the top surface 138 of the console box 130. Furthermore, the sub-chamber 122 expands and deploys together with the main chamber 120 into a shape that grips the console box 130. This enables the airbag cushion 114 to expand and deploy using the console box 130 as support, enabling restraint of occupants P1 and P2 in a more stable position. Therefore, the airbag cushion 114 enables efficient protection of adjacent occupants P1 and P2.

The interior of the sub-chamber 122 is connected to the interior of the main chamber 120 by a vent hole 126. As described above, the sub-chamber 122 and the main chamber 120 are separated by a partition wall 124, and the gas path is restricted to the vent hole 126. Therefore, the sub-chamber 122 is designed to prevent gas from leaking into the main chamber 120 when the occupant P2 is restrained, to maintain an appropriate expansion pressure, and to efficiently absorb the kinetic energy of the occupant P2.

### Modified Example

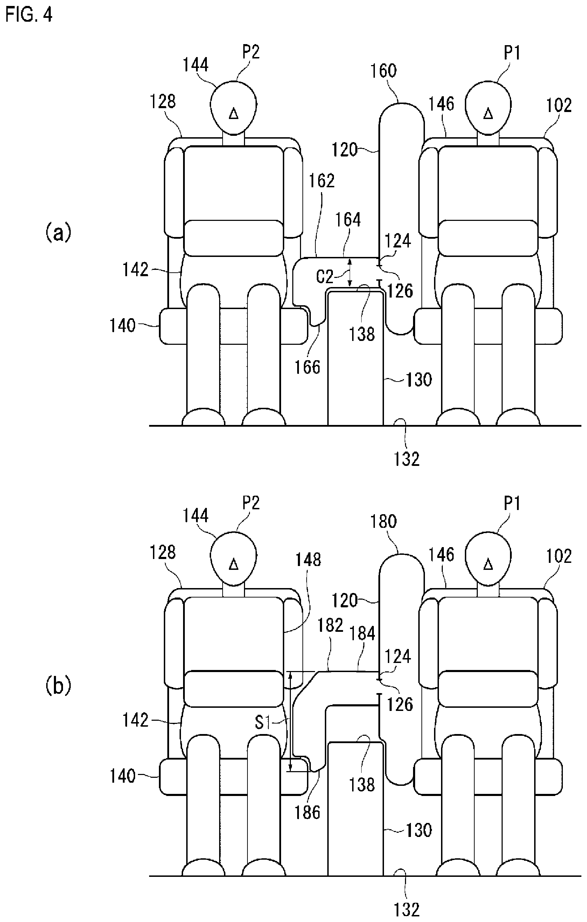

FIG. 4 is a diagram depicting Modified Examples 1 and 2 of the airbag cushion 108 of FIG. 3(a). In FIG. 4 and thereafter, the same symbols are given to the same constituent elements as those described above, whereby description of the aforementioned constituent elements is omitted. In the following description, components having the same name as a component already described are assumed to have the same function unless otherwise specified, even if marked with a different sign.

FIG. 4(a) is a diagram depicting an airbag cushion 160 of Modified Example 1. The airbag cushion 160 differs in configuration from the airbag cushion 114 in FIG. 3(a) in terms of the shape of a sub-chamber 162.

The airbag cushion 160 also expands and deploys, sandwiching the console box 130 between the main chamber 120 and the sub-chamber 162. This enables the airbag cushion 160 to maintain an orientation of being expanded and deployed, and to improve the restraining force on occupant P1 and occupant P2.

The sub-chamber 162 is configured to have a sub-upper wall part 164 and a sub-side wall part 166. The sub-upper wall part 164 expands and deploys, protruding from the main chamber 120 towards the second seat 128 side while in contact with the top surface 138 of the console box 130. In particular, the sub-upper wall part 164 has a roughly constant thickness C2 in the vertical direction, and volume thereof is reduced compared to the sub-upper wall part 134 (see FIG. 3(a)).

The sub-side wall part 166 bends downward from the tip end of the sub-upper end part 146 and expands and deploys to extend to the lateral area of the console box 130 on the second seat 128 side.

Also, with the airbag cushion 160, when the occupant P2 of the second seat 128 is about to move toward the first seat 102 side, the vicinity of the waist part 142 of the occupant P2 can be restrained by the sub-chamber 122, and kinetic energy of the occupant P2 can be attenuated. Furthermore, the trajectory L1 of the head part 144 of occupant P2 (see FIG. 3(b)) is contained within the main chamber 120 and restrained, thereby preventing contact between occupant P1 and occupant P2.

In addition, by gripping the console box 130 with the main chamber 120 and the sub-chamber 162, the airbag cushion 160 can expand and deploy with the console box 130 as support, enabling restraint of occupants P1 and P2 in a more stable orientation. Therefore, the airbag cushion 160 can also efficiently protect adjacent occupants P1 and P2.

FIG. 4(a) is a diagram depicting an airbag cushion 180 of Modified Example 2. A sub-chamber 182 of the airbag cushion 180 is configured to have a sub-upper wall part 184 and a sub-side wall part 186.

The airbag cushion 180 also expands and deploys, sandwiching the console box 130 between the main chamber 120 and the sub-chamber 182. This enables the airbag cushion 180 to maintain an orientation of being expanded and deployed, and to improve the restraining force on occupant P1 and occupant P2.

The sub-upper wall part 184 is provided at a location on the main panel 120b of the main chamber 120 at a height close to a chest part 148 of the occupant P2. Furthermore, the sub upper wall part 184 expands and deploys in a state of being spaced upward from the top surface 138 of the console box 130 and protruding from the main chamber 120 toward the second seat 128 side.

The sub-side wall part 186 bends downward from the tip end of a sub-upper end part 184 and expands and deploys to extend to the lateral area of the console box 130 on the second seat 128 side.

With the airbag cushion 180, when the occupant P2 of the second seat 128 is about to move toward the first seat 102 side, the vicinity of the waist part 142 of the occupant P2 can be restrained by the sub-chamber 122 with kinetic energy being attenuated, and the trajectory L1 of the head part 144 of the occupant P2 (see FIG. 3(b)) can be kept within the main chamber 120 and restrained, whereby contact between the occupant P1 and the occupant P2 can be avoided.

In particular, the sub-chamber 182 expands and deploys to a height position such that the sub-upper wall part 184 is separated from the console box 130, thereby ensuring a larger vertical dimension S1 for the sub-side wall part 186. Therefore, the airbag cushion 180 can restrain a wider area around the waist part 142 of the occupant P2 by utilizing the sub-chamber 182.

In addition, by gripping the console box 130 with the main chamber 120 and the sub-chamber 182, the airbag cushion 180 can expand and deploy with the console box 130 as support, enabling restraint of occupants P1 and P2 in a more stable orientation. Therefore, the airbag cushion 180 can also efficiently protect adjacent occupants P1 and P2.

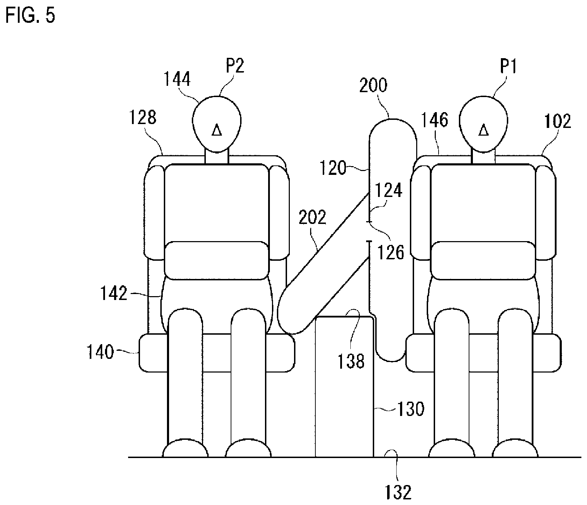

FIG. 5 is a diagram depicting an airbag cushion 200 of Modified Example 3. A sub-chamber 202 of the airbag cushion 200 has a shape that extends diagonally downward toward the second seat 128 side.

The airbag cushion 200 also expands and deploys, sandwiching the console box 130 between the main chamber 120 and the sub-chamber 202. This enables the airbag cushion 200 to maintain an orientation of being expanded and deployed, and to improve the restraining force on occupant P1 and occupant P2.

The sub-chamber 202 protrudes toward the second seat 128 side from a location on the main panel 120b of the main chamber 120 that is above the console box 130, and a tip end expands and deploys so as to reach a lateral area on the second seat 128 side of the console box 130.

With the airbag cushion 200 as well, when the occupant P2 of the second seat 128 is about to move toward the first seat 102 side, the sub-chamber 202 can be interposed between the occupant P2 and the console box 130, and the vicinity of the waist part 142 of the occupant P2 can be restrained by the sub-chamber 202 to attenuate the kinetic energy of the occupant P2. Furthermore, the trajectory L1 of the head part 144 of occupant P2 (see FIG. 3(b)) is contained within the main chamber 120 and restrained, thereby preventing contact between occupant P1 and occupant P2.

In addition, by gripping the console box 130 with the main chamber 120 and the sub-chamber 202, the airbag cushion 200 can expand and deploy with the console box 130 as support, enabling restraint of occupants P1 and P2 in a more stable orientation. Therefore, the airbag cushion 200 can also efficiently protect adjacent occupants P1 and P2.

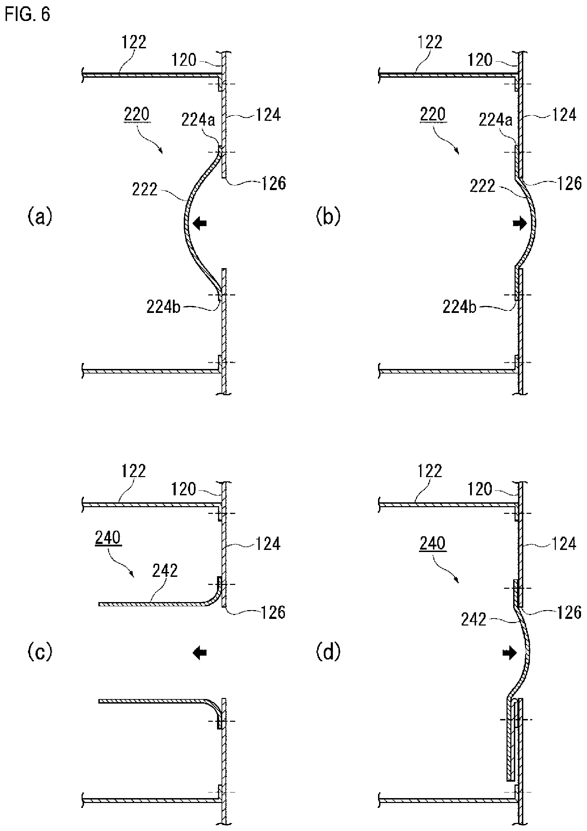

FIG. 6 is a diagram depicting the Modified Examples 1 and 2 for near a vent hole 126 in FIG. 3(a). FIG. 6(a) depicts Modified Example 1 of a check valve structure 220.

The check valve structure 220 is formed including a vent hole 126 and a patch 222. The patch 222 can be implemented, for example, by a rectangular panel made of the same material as the panel members that make up the airbag cushion 114.

The patch 222 is provided inside the sub-chamber 122 in a state of covering the vent hole 126. The patch 222 has a pair of opposing edges 224a and 224b joined to the partition wall 124 by sewing, while another pair of edges (not shown) are detachable from the partition wall 124. Therefore, when gas pressure in the main chamber 120 increases, the patch 222 separates from the vent hole 126 towards the sub-chamber 122, allowing gas to flow into the sub-chamber 122 through the gap between a pair of edges (not shown).

FIG. 6(b) depicts a state in which the gas pressure inside the sub-chamber 122 in FIG. 6(a) has increased.

When the sub-chamber 122 restrains the occupant P2 (see FIG. 3(b)), the pressure inside the sub-chamber 122 may become higher than that inside the main chamber 120. At this time, the patch 222 is drawn into vent hole 126 by the gas pressure, blocking the vent hole 126. Therefore, the gas in the sub-chamber 122 is less likely to move to the main chamber 120, and the expansion pressure of the sub-chamber 122 is maintained at a high level.

Therefore, the check valve structure 220 prevents gas from flowing back from the sub-chamber 122 to the main chamber 120, and enables further enhancing of the occupant restraint force provided by the sub-chamber 122.

FIG. 6(c) depicts Modified Example 2 of a check valve structure 240.

The check valve structure 240 is formed including a vent hole 126 and a duct 242. The duct 242 can be achieved, for example, by forming a cylindrical shape from the same material as the panel members that constitute the airbag cushion 114.

The duct 242 is provided inside the sub-chamber 122 and connected to the vent hole 126. The duct 242 allows gas to flow from the vent hole 126 into the sub-chamber 122 when the gas pressure in the main chamber 120 increases.

FIG. 6(d) depicts a state in which the gas pressure inside the sub-chamber 122 in FIG. 6(c) has increased.

When the sub-chamber 122 restrains the occupant P2 (see FIG. 3(b)), the pressure inside the sub-chamber 122 may become higher than that inside the main chamber 120. At this time, the duct 242 is collapsed by the pressure of the gas so as to be drawn into the vent hole 126, thereby closing the vent hole 126. Therefore, the gas in the sub-chamber 122 is less likely to move to the main chamber 120, and the expansion pressure of the sub-chamber 122 is maintained at a high level.

Therefore, the check valve structure 240 also prevents gas from flowing back from the sub-chamber 122 to the main chamber 120, and enables further enhancing of the occupant restraint force provided by the sub-chamber 122.

In any of the embodiments and modified examples described above, the side airbag device 100 can be installed in any seat in the front row, rear row, or even on either the left or right side of the vehicle. In addition, although the airbag cushion 114 is provided on the right side in the width direction of the first seat 102 in FIG. 3(a), if the airbag cushion 114 is configured symmetrically, the airbag cushion can also be provided on the left side in the width direction of the second seat 128.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts depicted in detail in the attached drawings. In addition, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be used for a vehicle side airbag device that restrains an occupant seated in a vehicle seat.

### DESCRIPTION OF CODES

100. Side airbag device, 102. First seat, 104. Seat back, 106. Seat cushion, 108. Seat frame, 110. Side frame, 112. Airbag module, 114. Airbag cushion, 116. Inflator, 118. Stud bolt, 120. Main chamber, 120a, 120b. Main panel, 122. Sub-chamber, 124. Partition wall, 126. Vent hole, 128. Second seat, 130. Console box, 132. Floor, 134. Sub-upper wall part, 136. Sub-side wall part, 138. Top surface, 140. Seat cushion, 142. Waist part, 144. Head part, 146. Upper end, 148. Chest part, P1. Occupant, P2. Occupant, L1. Trajectory, C1. Cross-sectional area, 160. Airbag cushion, 162. Sub-chamber, 164. Sub-upper wall part, 166. Sub-side wall part, 180. Airbag cushion, 182. Sub-chamber, 184. Sub-upper wall part, 186. Sub-side wall part, S1. Vertical dimension, 200. Airbag cushion, 202. Sub-chamber, 220. Check valve structure, 222. Patch, 224a, 224b. Edge, 240. Check valve structure, 242. Duct

## Claims

1. A vehicle side airbag device comprising:
a first seat and a second seat arranged in a vehicle width direction with a prescribed console box installed on a floor of the vehicle interposed therebetween; and
an airbag module provided at a side part of the first seat, on the second seat side, wherein
the airbag module includes:
an inflator secured to the first seat; and
an airbag cushion configured to receive gas from the inflator and expand and deploy, and
the airbag cushion includes:
a main chamber that expands and deploys at least from a range above the console box to a lateral range on the first seat side of the console box; and
a sub-chamber that expands and deploys to a lateral range on the second seat side of the console box while protruding toward the second seat side from a location, of the main chamber, that is above the console box.

2. The vehicle side airbag device according to claim 1, wherein the airbag cushion expands and deploys in a state in which the console box is sandwiched between the main chamber and the sub-chamber.

3. The vehicle side airbag device according to claim 1 or 2, wherein the main chamber expands and deploys to a range above an upper end of a seat back of the first seat.

4. The vehicle side airbag device according to claim 1 or 2, wherein
the sub-chamber includes:
a sub upper wall part protruding from the main chamber toward the second seat side along a top surface of the console box; and
a sub side wall part bent downward from the sub upper wall part and extending to a lateral range on the second seat side of the console box.

5. The vehicle side airbag device according to claim 4, wherein the sub upper wall part is in contact with the top surface of the console box.

6. The vehicle side airbag device according to claim 4, wherein the sub upper wall part has a cross-sectional area that gradually increases from the second seat side toward the main chamber.

7. The vehicle side airbag device according to claim 4, wherein the sub side wall part expands and deploys in a state of extending in a vertical direction between the second seat and the console box.

8. The vehicle side airbag device according to claim 1 or 2, wherein
the airbag cushion further includes:
a partition wall partitioning the main chamber and the sub-chamber; and
a vent hole formed in the partition wall and allowing the gas to pass therethrough.

9. The vehicle side airbag device according to claim 8, wherein the airbag cushion further includes a check valve provided on the sub-chamber side of the partition wall and preventing reverse flow of gas to the main chamber.
